Europäisches Patentamt

European Patent Office

Office européen des brevets

(11) Numéro de publication: **0 187 775 B1**

(12) **FASCICULE DE BREVET EUROPEEN PUBLI E EN APPLICATION DE L'article 158, paragraphe 3 de la CH0**

(45) Date de publication de fascicule du brevet:
06.03.91

(51) Int. Cl.⁵: **G06K 9/22**

(21) Numéro de dépôt: 85903014.0

(22) Date de dépôt: 24.06.85

(86) Numéro de dépôt internationale :
**PCT/FR85/00171**

(87) Numéro de publication internationale :
**WO 86/00444 (16.01.86 86/02)**

(54) **PROCEDE DE NUMERISATION D'UNE ECRITURE MANUSCRITE OU DE TOUT TRACE EN GENERAL,ET PROCEDE DE COMPARAISON OU DE RECONNAISSANCE LE COMPORTANT.**

(30) Priorité: 25.06.84 FR 8409954

(43) Date de publication de la demande:
23.07.86 **Bulletin 86/30**

(45) Mention de la délivrance du brevet:
06.03.91 **Bulletin 91/10**

(84) Etats contractants désignés:
**AT BE CH DE FR GB IT LI LU NL SE**

(56) Documents cités:
**US-A- 3 199 078**

**Pattern Recognition,volume 5,no. 4,décembre 1973,Pergamon Press (GB),V.Michael Powers:"Pen direction sequences in character recognition",pages 291-302,voir page 299,lignes 16-22**

(73) Titulaire: **BOUKRIS, Alain**
**80, rue de Rome**
**F-75008 Paris(FR)**

(72) Inventeur: **BOUKRIS, Alain**
**80, rue de Rome**
**F-75008 Paris(FR)**

(74) Mandataire: **Rinuy, Santarelli**
**14, avenue de la Grande Armée**
**F-75017 Paris(FR)**

Proceedings of the Seminar on Pattern Recognition,volume 1,subno.30,Liège university,Sart-Tilman,BE,19,20 novembre. 1977,Ophain (BE),H.J.G.Wolff:"Recognition of handwritten capitals based on the use of a 'line follower'",pages 7.2.1-7.2.7,voir Introduction

IBM Technical Disclosure Bulletin,volume 24,no.11A,avril 1982,New York (US),C.C.Tappert:"Cursive Script recognition system by elastic matching"pages 5404-5409,voir page 5408,dernier alinéa

Proceedings of the Second International Joint Conference on Pattern Recognition,13-15 août 1974 à Copenhagen,IEEE,Washington (US),Toshiyuki Sakai et al.:"Multi-feature display of on-line signature by TV display",pages 303-304,voir page 3o,alinéas 3-6

Proceedings of the fourth International Joint Conference on Pattern Recognition,7-10 novembre 1978 à Kyoto (JP),Katsuo Ikeda et al.:"On-line recognition of handwritten characters utilizing positional nad strok vector sequences",voir chapitres 3.1-3.4

**Description**

La présente invention concerne un procédé de numérisation et plus généralement un procédé de comparaison ou de reconnaissance d'une écriture manuscrite ou de tout tracé en général.

Dans les années 65, le document US-A-3.199.078 a proposé un dispositif pour identifier un caractère manuscrit pendant qu'on l'écrit. Ce dispositif comporte un instrument d'écriture, des moyens pour produire un signal électrique représentatif de la direction qu'est en train d'emprunter l'instrument d'écriture, et un circuit électronique pour reconnaître à partir de la succession des signaux produits quel est le caractère qui a été tracé avec l'instrument d'écriture, ce caractère devant faire partie d'un jeu préfixé de caractères ayant une forme particulière ne comportant qu'un petit nombre de segments rectilignes. Dans le mode de réalisation le plus élaboré, huit directions de mouvements sont détectées : horizontale, verticale, la première et deuxième diagonales, dans chacun des deux sens ; dix sortes de signaux électriques sont produits, huit sortes quand l'instrument d'écriture a effectivement écrit (une pour chacune des directions détectées), et deux sortes quand l'instrument se déplace sans écrire (respectivement pour les directions horizontale vers le haut et diagonale bas-droite vers haut-gauche) ; et les caractères du jeu préfixé sont tels qu'en les traçant on produit de deux signaux (pour la lettre T) à sept signaux (pour les lettres S ou huit). Pour chaque lettre, tous les ordres d'apparition des signaux qui sont possibles sont prévus de façon à ce que l'identification d'un caractère soit indépendante de l'ordre dans lequel il est tracé, et le document souligne que le dispositif qu'il décrit permet d'identifier un caractère indépendamment de sa taille.

Dans l'état actuel de la technique, on développe une représentation par suite numérique des tracés, cette numérisation en vue de leur reconnaissance éventuelle utilisant :
- un dispositif de saisie qui fournit les caractéristiques des différents points d'un tracé ;
- un logiciel de "mise en forme" des données ainsi saisies ;
- un logiciel de comparaison des données provenant du tracé à reconnaître, à celles, préalablement enregistrées, d'un lexique ;
- un ordinateur, en général de forte puissance, pour traiter les données.

Ainsi un article paru dans "PATTERN RECOGNITION", vol. 5, N° 4 de Décembre 1973 intitulé : "Pen direction sequences in character recognition" décrit un procédé de reconnaissance de caractères dont l'échantillonnage en points successifs et le calcul de la pente, en chacun de ces points, est effectué en continu lorsqu'un stylo est en contact avec un plan d'écriture. Dans ce procédé les points ayant même valeur de tangente sont ignorés. On effectue alors la comparaison entre des séquences de chiffres correspondant aux différentes pentes, prises parmi 8 pentes possibles, en chacun des points du tracé du caractère. Ces séquences sont délimitées par des identificateurs de début et de fin de tracé correspondant à un mouvement du stylo dans le sens vertical.

Un autre article est paru dans les pages 5404 à 5409 du IBM TECHNICAL DISCLOSURE BULLETIN vo. 24, N° 11A, New York (US), sous la signature de C.C TAPPERT et intitulé "Cursive script recognition systems by elastic matching". Ce document préconise, pour la reconnaissance de l'écriture cursive, que les lignes de mots à reconnaître soient écrites sur un papier ayant des lignes d'un quart de pouce maintenues sur une tablette électronique, l'utilisation de cette tablette procurant comme données la trace pratiquement exacte de l'extrémité de l'instrument d'écriture et le nombre, l'ordre et la direction des trajectoires élémentaires empruntées au cours de l'opération d'écriture. Plusieur étapes de traitement préliminaire sont pratiquées sur les données : tout d'abord une ligne d'écriture est segmentée en mots, ensuite on élimine les données ayant l'apparence de crochets car elles proviennent d'inexactitudes du matériel dans la détection des mouvements de montée-descente du crayon, puis les données correspondantes à un point d'écriture sont réduites à un point-données unique, et finalement on ne retient que les points-données qui sont à peu près régulièrement espacés afin de réduire les pauses, hésitations et autres variations dans la vitesse d'écriture. Les points-données restant à l'issue de ce traitement préliminaire sont ensuite paramétrés, par l'angle de la tangente de la courbe au point-données et par la hauteur de ce point par rapport à la ligne de base, de telle sorte qu'on obtienne finalement une suite dont chaque élément est un vecteur à deux paramètres (tangente et hauteur), ces paramètres étant choisis pour leur propriété d'invariance par rapport à la taille ou à la translation de l'écriture. La reconnaissance est pratiquée en comparant le mot inconnu à des lettres prototypes et en choisissant la séquence de lettres donnant la plus petite distance totale, selon une distance et une équation d'optimisation définies dans le document, l'équation d'optimisation étant résolue par programation dynamique utilisant une relation récursive.

Si la qualité de ces dispositifs de saisie de l'art connu permet le recueil de certaines informations concernant le tracé, leur représentation mathématique en vue d'un traitement automatisé présente un ou plusieurs des défauts suivants :
- suppression de données, concernant tout ou partie du tracé, considérées comme redondantes, ou au contraire sans valeur descriptive ;

- expression sous une forme mathématique complexe, par exemple : suite de binomes et de "séparateurs", intégrales, système de calcul de poids relatif ... ;
- non utilisation des "blancs", c'est-à-dire des points occupés par le dispositif de saisie lors de son déplacement sans qu'il y ait de tracé à proprement parler, pour une analyse du tracé.

Les imperfections de ces procédés expliquent les insuffisances de reconnaissance (en particulier 0 et 6 ou 7 et Z), et/ou l'importance des moyens matériels et logiciels mis en oeuvre, et donc leur coût.

Pour pallier ces inconvénients, le procédé selon l'invention a pour objet de conserver l'intégralité des données et de les mettre sous une forme aisément accessible au traitement informatisé.

La présente invention propose à cet effet un procédé pour développer une représentation par suite numérique d'une écriture manuscrite ou de tout tracé en général, associant une table graphique, un crayon et un logiciel destiné à prendre en compte les déplacements du crayon et comprenant l'étape d'enregistrer pour chaque point élémentaire du tracé un premier indice représentant la tangente du tracé, procédé caractérisé en ce qu'il comprend l'étape d'enregistrer également pour chaque point élémentaire du tracé un deuxième indice représentant le caractère blanc ou plein du tracé, la totalité d'un déplacement du crayon lors du tracé étant pris en compte comme une suite continue de points élémentaires, y compris les blancs ; la table graphique et le crayon étant éventuellement remplacé par une souris dont les déplacements sont pris en compte par le logiciel, ou par un dispositif optique d'analyse d'un tracé préexistant comportant un système de lecture optique adapté à suivre le tracé dont les déplacement sont pris en compte par le logiciel.

Ce procédé permet de définir un tracé, qu'il soit manuscrit ou non, par des données numériques simples réalisant entre le tracé et sa représentation mathématique un ensemble de relations biunivoques.

Une forme de réalisation préférentielle de l'invention utilise :

- une tablette a' digitaliser munie d'un stylet permettant l' acquisition : des coordonnées de tous les points du tracé, de leur état écrit ou non écrit, de la vitesse de déplacement du stylet (par la mesure du temps mis par le stylet pour passer d'un point au suivant immédiat) :
- un logiciel de "mise en forme" des données;

- un logiciel de comparaison des données;

La présente invention par sa simplicité permet en outre l'utilisation d'un simple micro-ordinateur.

Les caractéristiques et avantages de l'invention ressortiront d'ailleurs de la description qui va suivre, à titre d' exemple, en référence aux dessins annexés sur lesquels :

- la figure la illustre la distribution des points dans un système graphique où tous les points sont tangents;
- la figure 1b illustre la distribution des points dans un système graphique en coordonnées orthonormées;
- la figure 2 illustre la décomposition en points élémentaires d'un "t" dans un système graphique de type la, avec prise en compte (en pointillés) des déplacements non écrits.
- la figure 3 illustre la représentation, après compactage des données, du même caractère sous forme numérique;
- la figure 4 illustre la représentation graphique de la forme numérique;
- les figures 5a et 5b illustrent la comparaison à un tracé dont la longueur est dans le rapport N par rapport au tracé représenté aux figures 2 et 3,

Le procédé de numérisation de l'invention considère un tracé comme un phénomène continu. Cela est lié à la prise en compte des déplacements non écrits éventuels au cours du tracé dans l'ordre chronologique.

Une suite numérique est affectée à chaque type de données (positions des points, caractère écrit ou non vitesses instantanées...). Dans chaque suite, chaque point du tracé est représenté, dans l'ordre d'acquisition, par une valeur.

Le tracé est donc représenté par des suites de nombres, une par type de données :

a) le caractère écrit ou non écrit peut être décrit par deux valeurs (1 et 0. par exemple). La représentation de ce critère pour tout le tracé est une suite de N nombres 0 ou 1, N étant le nombre de points du tracé;

b) les coordonnées des différents points peuvent être exprimées en terme de positions relatives d'un point par rapport au précédent (ou au suivant ce qui revient au même).

En effet, quel que soit le système graphique, le tracé est décomposé en points successifs dont les dimensions et la répartition sont déterminées par le système utilisé. Il en résulte que la droite qui réunit un point et le suivant se confond avec la tangente au point initial; en conséquence, le nombre des valeurs possibles de la tangente en un point donné est déterminé par le nombre de positions possibles du point suivant.

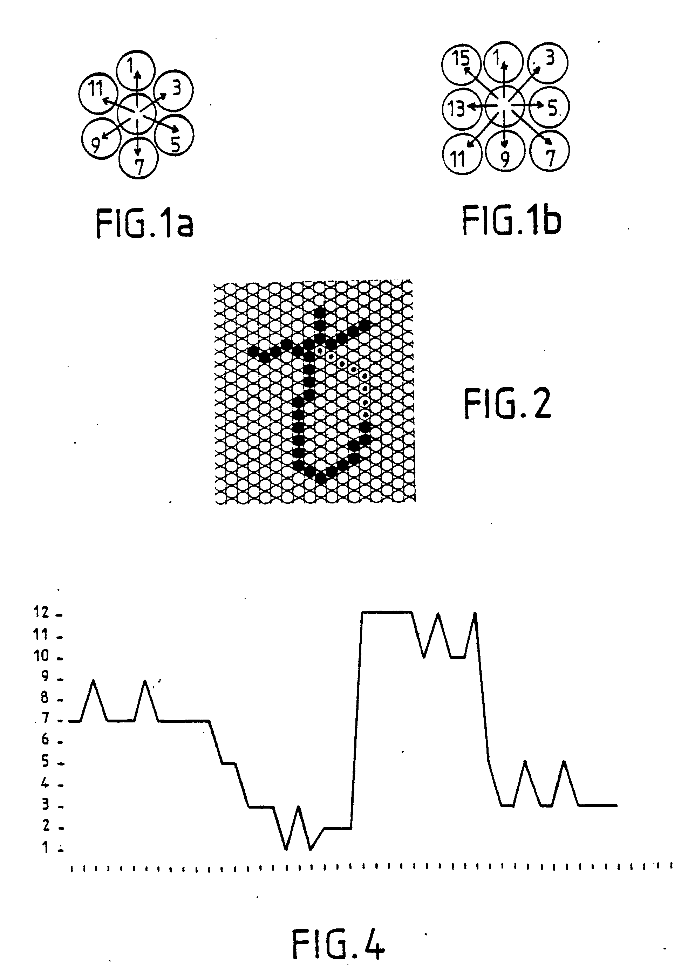

Celles-ci sont en nombre limité. En général elles sont au nombre de 8, parfois 6 seulement (figures 1a et 1b).

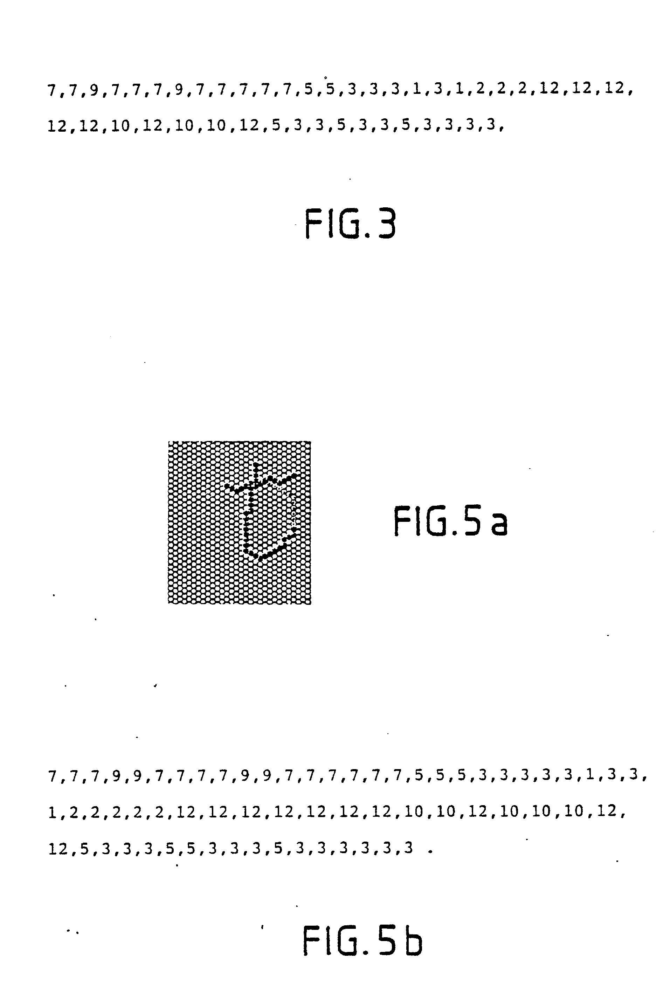

A partir du premier point du tracé (dont on peut conserver éventuellement les coordonnées absolues), la totalité du déplacement est décrite par une suite de N valeurs numériques exprimant chacune la tangente en un point du tracé (figures 2 et 3).

c) De même, connaissant le temps du déplacement entre deux points successifs. on peut calculer pour chaque point un indice qui exprime la vitesse de déplacement. On peut alors créer une autre suite numérique qui caractérise point par point la vitesse tout au long du tracé.

On remarquera qu' à ce stade aucune donnée n'a été supprimée, et que les suites décrites sont en relation biunivoque avec le tracé. Il est en effet possible à partir de ces données de recréer le tracé original en en respectant toutes les caractéristiques, tant statiques que dynamiques.

Les données ainsi recueillies étant nombreuses, il importe, pour accélérer leur temps de traitement, de les compacter. Ceci est possible en choisissant certaines valeurs numériques remarquables.

Ainsi, si l'on choisit les valeurs 1 et 0 pour décrire l'état écrit ou non écrit d'un point, et des valeurs successives toutes paires (ou toutes impaires) pour décrire les valeurs possibles des tangentes, on peut, en additionnant la valeur de ces deux indices pour un même point, obtenir un seul indice décrivant par une seule suite de nombres l'ensemble des informations statiques du tracé.

Cette façon de procéder facilite beaucoup les comparaisons et économise la place nécessaire au stockage des données. Ce compactage peut avoir lieu au fur et à mesure de la saisie ou s'effectuer à la fin de celle-ci.

Ce procédé de l'invention peut être appliqué à la comparaison des tracés en général, et en particulier à la reconnaissance de l'écriture où de la signature.

Il est alors nécessaire de procéder à la numérisation des différents tracés comme précédemment décrits, puis à leur comparaison. Si deux tracés sont identiques, les suites numériques qui les représentent sont identiques, Plus ils sont différents plus les valeurs qui les composent sont éloignées, Il suffit donc de calculer, point par point, l'écart qui sépare les valeurs numériques de deux tracés, de faire la somme de ces écarts et de rapporter ce total au nombre de points du tracé (un même total n'a pas la même importance s'il porte sur des tracés courts ou longs) pour avoir ainsi un indice de ressemblance. Plus cet indice est faible plus la ressemblance est étroite.

La comparaison d' un tracé à plusieurs autres fournit pour chacun un indice dont le plus faible désigne le tracé le plus ressemblant.

On peut fixer une valeur au dessus de laquelle il n'y a pas de ressemblance suffisante entre les tracés pour les considérer comme ayant même valeur descriptive.

Ce procédé s'applique en particulier à la reconnaissance de l'écriture et de la signature.

Le problème est assez simple lorsqu'il n'y a pas d'ambiguité sur l'identité du dernier point du tracé, puisque le nombre de points composant celui-ci est connu. C'est le cas pour une signature ou pour les caractères graphiques de certaines langues qui sont toujours séparés les uns des autres par un blanc (hébreu, chinois...).

Dans le cas de tracés enchainés, on procède tout d'abord à la numérisation de chaque signe graphique élémentaire et on constitue un lexique de ces signes.

L'isolement et la reconnaissance de certains d'entre eux dans un tracé enchainé de plusieurs signes comprend plusieurs étapes : on compare tout d'abord les N points qui composent chacun d' entre eux aux N premiers points du tracé à reconnaitre. (N est un nombre qui diffère d'un, signe à l'autre). En cas d'égalité d'indices, le tracé comportant le plus grand nombre N de points correspond aux N premiers points du tracé à reconnaitre. La comparaison se poursuit alors à partir du point suivant.

La comparaison de tracé de tailles différentes est également possible. En effet deux tracés dont l'un n'est que l'agrandissement de l'autre dans un rapport de 1 à N, sont représentés par des suites numériques qui ne diffèrent que par le fait que chaque valeur de l'une est répétée N fois consécutives dans l'autre.

Pour comparer deux tracés dont les longueurs respectives sont dans un rapport de 1 à N, il suffit decomparer le point de rang R de l'une au point de rang R x N de l'autre. Les figures 5a et 5b montrent une lettre "t" identique à celle de la figure 2 mais 1,5 fois plus grande et sa représentation numérique (à comparer à celle de la figure 2).

On peut comparer un tracé quelconque à ceux d'un lexique de référence qui peut être propre à un utilisateur donné ou comporter un échantillonnage plus vaste.

Une forme de réalisation du procédé de l'invention de numérisation de tracés comporte un dispositif de saisie des données comprenant :
- une tablette à digitaliser munie de son crayon;
- un crayon optique;
- une "souris".

L'invention n'est, bien entendu, pas limitée aux détails de formes de réalisation que l'on vient de considérer à titre d'exemple.

En effet ce dispositif peut être tout autre dispositif permettant de définir un tracé comme une suite de points dont on connait la position, le caractère écrit ou non, la vitesse instantanée.... en fonction du type de système de coordonnées utilisé : polaire, orthonormé, ou tout autre représentation géométrique; en fonction du type de tracés qui peuvent être : des signatures, des signes d'écriture alphabétique, idéogrammatique ou autres, des tracés manuscrits ou obtenus par des procédés mécaniques, industriels ou scientifiques, ou n'importe quel autre type de tracé; et en fonction du moment de la saisie du tracé qui peut être : contemporain de sa création, ou différé, le tracé étant analysé par un dispositif par exemple optique dont les "déplacements" sont numérisés.

## Revendications

1. Procédé pour développer une représentation par suite numérique d'une écriture manuscrite ou de tout tracé en général, associant une table graphique, un crayon et un logiciel destiné à prendre en compte les déplacements du crayon et comprenant l'étape d'enregistrer pour chaque point élémentaire du tracé un premier indice représentant la tangente du tracé, procédé caractérisé en ce qu'il comprend l'étape d'enregistrer également pour chaque point élémentaire du tracé un deuxième indice représentant le caractère blanc ou plein du tracé, la totalité d'un déplacement du crayon lors du tracé étant pris en compte comme une suite continue de points élémentaires, y compris les blancs ; la table graphique et le crayon étant éventuellement remplacé par une souris dont les déplacements sont pris en compte par le logiciel, ou par un dispositif optique d'analyse d'un tracé préexistant comportant un système de lecture optique adapté à suivre le tracé dont les déplacement sont pris en compte par le logiciel.

2. Procédé selon la revendication 1, caractérisé en ce que le tracé est décomposé en points élémentaires dont la répartition est fonction du système graphique utilisé, et en ce que la tangente en un point est confondue avec la droite qui joint ce point et le point précédent ou suivant immédiat, le nombre des valeurs possibles des tangentes étant ainsi déterminé, par le type de répartition des points du système graphique.

3. Procédé selon l'une quelconque des revendications 1 ou 2, caractérisé en ce qu'il comprend l'étape d'enregistrer également pour chaque point élémentaire du tracé, un troisième indice représentant la vitesse instantanée en ce point du tracé.

4. Procédé suivant l'une quelconque des revendications 1 ou 2, caractérisé en ce qu'on utilise pour lesdits premier et deuxième indices certaines valeurs numériques remarquables, adaptées à permettre de représenter le tracé par une seule suite numérique.

5. Procédé suivant la revendication 4, caractérisé en ce que lesdites valeurs numériques remarquables sont 0 et 1 pour le deuxième indice et des nombres tous pairs ou tous impairs pour le premier indice, en ce qu'il comporte l'étape d'additionner pour chaque point élémentaire du tracé lesdits premier et deuxième indices.

6. Procédé pour la reconnaissance d'une écriture manuscrite ou la comparaison des tracés en général, caractérisé en ce qu'il comporte le développement d'une représentation par suite numérique des différents tracés conformément au procédé selon l'une quelconque des revendications 1 à 5, et la comparaison des suites numériques développées.

7. Procédé selon la revendication 6, caractérisé en ce que ladite comparaison des suites numériques comporte le calcul, point par point si on compare deux tracés ayant le même nombre de points, des écarts entre les valeurs des suites numériques de même type et de leur somme rapportée au nombre total de points du tracé, pour obtenir un indice de ressemblance ; tandis que si on compare deux tracés dont le nombre de points est dans un rapport de 1 à N, le calcul est fait entre le point de rang R de l'un et de rang (N x R) de l'autre.

8. Procédé selon la revendication 7, caractérisé en ce qu'il comporte le calcul dudit indice de ressemblance entre un premier tracé et chaque tracé d'un groupe de tracés, et la détermination du tracé dudit groupe de tracés auquel correspond le plus faible des indices de ressemblance calculés, qui est considéré comme le plus ressemblant au premier tracé.

9. Procédé selon l'une quelconque des revendications 7 ou 8, caractérisé en ce qu'on teste si l'indice de ressemblance est inférieur à une valeur prédéterminée, pour décider s'il est significatif.

10. Procédé selon l'une quelconque des revendications 6 à 9, caractérisé en ce qu'il comporte, afin d'isoler et de reconnaître des signes graphiques dans un tracé enchaîné de plusieurs d'entre eux, la comparaison, de façon itérative, de N points consécutifs du tracé avec chaque signe graphique à identifier, N étant un nombre variable, égal successivement au nombre de points de chaque signe graphique à identifier.

11. Procédé selon l'une quelconque des revendications 8 à 10, caractérisé en ce que lesdits signes graphiques ou tracés dudit groupe de tracés, notamment des échantillons de l'écriture personnelle d'un utilisateur, sont préalablement saisis et mémorisés dans un lexique.

## Claims

1. A method for developing a representation of a sample of hand-writing, or any trace in general, by a numerical sequence, which method associates a graphics plotter, a pen and software adapted to take into account the movements of the pen, and comprises the step of assigning to each elementary point of the trace a first index representing the tangent to the trace, the method being oharacterized in that it also comprises the step of assigning to each elementary point of the trace a second index representing the blank or filled-in nature of the trace, the total movement of the pen over the trace being taken into account as a continuous sequence of elementary points including the blanks, the graphics plotter and the pen optionally being replaced by a mouse, the movements of which are taken into account by the software, or by a device for optical analysis of a pre-existing trace comprising an optical reading system adapted to follow the trace, the movements of which are taken into account by the software.

2. A method according to Claim 1, characterized in that the trace is broken down into elementary points, the distribution of which is a function of the graphics system used, and in that the tangent to a point merges into the straight line which joins this point and the immediately preceding or following point, the nunber of possible tangent values thus being determined by the dot distribution type of the graphics system used.

3. A method according to any one of Claims 1 or 2, characterized in that it also comprises the step of assigning to each elementary point in the trace a third index representing the instantaneous speed at this point in the trace.

4. A method according to any one of Claims 1 or 2, characterized in that certain specific numerical values are used for the first and second indices, chosen to allow the trace to be represented by a single numerical sequence.

5. A method according to Claim 4, characterized in that the said specific numerical values are 0 and 1 for the second index and all even or all odd numbers for the first index, and that it comprises, for each elementary point of the trace, the step of adding the said first and second indices.

6. A method for recognition of a sample of hand-writing or any trace in general, characterized in that it comprises the development of representations by numerical sequences of different traces using a method as described in any one of Claims 1 to 5 and comparison of the numerical sequences developed.

7. A method according to Claim 6, characterized in that the said comparison of numerical sequences comprises the calculation, point by point if two traces containing the same number of points are compared, of the differences between the values of numerical sequences of the same type, and of their sum, related to the total number of points in the trace, in order to obtain a similarity index ; whereas if two traces are compared in which the ratio of the number of points is 1 to N, the comparison is made between the R-rank point of the one and the (N x R)-rank point of the other.

8. A method according to Claim 7, characterized in that it comprises the calculation of the said index of similarity between a first trace and each trace of a group of traces, and the determination of that trace of the said group of traces which has the lowest calculated similarity index, which is considered to be the most like the first trace.

9. A method according to any one of Claims 7 or 8, characterized in that the similarity index is examined to see if it is less than a predermined value to decide if it is significant.

10. A method according to any one of Claims 6 to 9, characterized in that it comprises, so as to be able to isolate and recognize graphic characters in a linked trace containing a plurality of them, iterative comparison of N consecutive points in the trace with each graphic character to be identified, N being a varible number, successively equal to the number of points of every graphic character to be identified.

11. A method according to any one of Claims 8 to 10, characterized in that the said graphic characters or traces in the said group of traces, in particular in samples of the hand-writing of an individual user, are previously recorded and stored in a lexicon.

**Ansprüche**

1. Verfahren zur Entwicklung einer Darstellung einer Handschrift oder allgemein irgendeiner Kurve durch eine Zahlenfolge unter Verwendung einer graphischen Tafel, eines Stiftes und einer Logik, die den Verlagerungen des Stiftes Rechnung trägt, das für jeden elementaren Punkt der Kurve den Schritt des Einschreibens eines ersten Merkmals umfaßt, das die Tangente der Kurve repräsentiert, dadurch **gekennzeichnet,** daß das Verfahren in gleicher Weise für jeden elementaren Punkt der Kurve den Schritt des Einschreibens eines zweiten Merkmals umfaßt, das das Leerzeichen oder Vollzeichen der Kurve repräsentiert, wobei eine Verlagerung des Stiftes im Verlauf der Kurve insgesamt wie eine kontinuierliche Folge von elementaren Punkten einschließlich der Leerstellen berücksichtigt wird; und wobei die graphische Tafel und der Stift gegebenenfalls durch eine Maus ersetzt werden, deren Verlagerungen durch die Logik berücksichtigt werden, oder durch eine optische Vorrichtung zur Analyse einer bereits vorhandenen Kurve, die ein optisches Lesesystem zum Verfolgen der Kurve umfaßt, deren Verlagerungen durch die Logik Rechnung getragen wird.

2. Verfahren nach Anspruch 1, dadurch **gekennzeichnet,** daß die Kurve in elementare Punkte aufgeteilt wird, deren Verteilung eine Funktion des verwendeten graphischen Systems ist, und daß die Tangente an einem Punkt mit der Geraden vertauscht wird, die diesen Punkt mit dem unmittelbar vorhergehenden oder folgenden Punkt verbindet, wobei die Anzahl der möglichen Werte der Tangenten somit durch die Art der Punkteaufteilung des graphischen Systems bestimmt ist.

3. Verfahren nach einem der Ansprüche 1 oder 2, dadurch **gekennzeichnet,** daß es in gleicher Weise für jeden elementaren Punkt der Kurve den Schritt des Einschreibens eines dritten Merkmals umfaßt, das die momentane Geschwindigkeit an diesem Punkt der Kurve repräsentiert.

4. Verfahren nach einem der Ansprüche 1 oder 2, dadurch **gekennzeichnet,** daß für die ersten und zweiten Merkmale bestimmte ausgezeichnete Zahlenwerte verwendet werden, die die Darstellung der Kurve durch eine einzige Zahlenfolge zulassen.

5. Verfahren nach Anspruch 4, dadurch **gekennzeichnet,** daß die ausgezeichneten Zahlenwerte 0 und I für das zweite Merkmal sind und Zahlen, die alle geradzahlig oder alle ungeradzahlig sind, für das erste Merkmal, und daß das Verfahren für jeden elementaren Punkt der Kurve den Schritt des Addierens der ersten und zweiten Merkmale umfaßt.

6. Verfahren zur Erkennung einer Handschrift oder zum Vergleich von Kurven oder Linienzügen im allgemeinen, dadurch **gekennzeichnet,** daß es die Entwicklung einer Darstellung verschiedener Kurven durch eine numerische Folge gemäß dem Verfahren nach einem der Ansprüche 1 bis 5 sowie den Vergleich der entwickelten Zahlenfolgen umfaßt.

7. Verfahren nach Anspruch 6, dadurch **gekennzeichnet,** daß der Vergleich der Zahlenfolgen im Falle eines Vergleichs zweier Kurven mit derselben Anzahl von Punkten die punktweise Berechnung der Abstände zwischen den Werten der Zahlenfolgen der gleichen Art und deren auf die gesamte Anzahl der Punkte der Kurve bezogenen Summe umfaßt, um ein Ähnlichkeitsmerkmal zu erhalten, während im Falle eines Vergleichs zweier Kurven, deren Punktezahl in einem Verhältnis 1 zu N steht, die Berechnung zwischen dem Punkt vom Rang R der einen und dem Punkt vom Rang N x R der anderen durchgeführt wird.

8. Verfahren nach Anspruch 7, dadurch **gekennzeichnet,** daß es die Berechnung des Merkmals der Ähnlichkeit zwischen einer ersten Kurve und jeder Kurve einer Gruppe von Kurven umfaßt, sowie die Bestimmung der Kurve der Gruppe von Kurven, der das geringste der berechneten Ähnlichkeitsmerkmale entspricht und die als der ersten Kurve am ähnlichsten betrachtet wird.

9. Verfahren nach einem der Ansprüche 7 oder 8,

dadurch **gekennzeichnet,**
daß überprüft wird, ob das Ähnlichkeitsmerkmal unterhalb einem vorbestimmten Wert liegt, um zu entscheiden, ob es signifikant ist.

10. Verfahren nach einem der Ansprüche 6 bis 9, dadurch **gekennzeichnet,**
daß es zur Isolierung und Erkennung von graphischen Zeichen in einer zusammenhängenden Kurve mehrerer solcher Zeichen den iterativen Vergleich N aufeinanderfolgender Punkte der Kurve mit jedem zu identifizierenden graphischen Zeichen umfaßt, wobei N eine variable Zahl ist, die aufeinanderfolgend gleich der Anzahl von Punkten eines jeden zu identifizierenden graphischen Zeichens ist.

11. Verfahren nach einem der Ansprüche 8 bis 10, dadurch **gekennzeichnet,**
daß die graphischen Zeichen oder Kurven der Gruppe von Kurven, insbesondere Muster der persönlichen Handschrift eines Benutzers, zuvor erfaßt und in einem Lexikon gespeichert werden.

FIG.1a

FIG.1b

FIG.2

FIG.4

7,7,9,7,7,7,9,7,7,7,7,7,5,5,3,3,3,1,3,1,2,2,2,12,12,12,

12,12,10,12,10,10,12,5,3,3,5,3,3,5,3,3,3,3,

FIG.3

FIG.5 a

7,7,7,9,9,7,7,7,7,9,9,7,7,7,7,7,7,5,5,5,3,3,3,3,3,1,3,3,

1,2,2,2,2,2,12,12,12,12,12,12,12,10,10,12,10,10,10,12,

12,5,3,3,3,5,5,3,3,3,5,3,3,3,3,3,3 .

FIG.5 b